# EUROPEAN PATENT APPLICATION

(11) **EP 1 226 790 A1**
(43) Date of publication of application: **31.07.2002**
(21) Application number: 02001095.5
(22) Date of filing: 22.01.2002
(51) Int. Cl.: A61C 5/06

(54) **Vacuum type capsule for dental restoration material**

(30) Priority: 25.01.2001 JP 2001017476
(71) Applicant: GC Corporation, Itabashi-ku, Tokyo 174 (JP)
(72) Inventor: Kaneko, Masaaki, Itabashi-ku, Tokyo 174 (JP); Mamada, Koichi, Itabashi-ku, Tokyo 174 (JP)
(74) Representative: Müller-Boré & Partner Patentanwälte

(57) **Abstract**

To provide a capsule for a dental restoration material, in the capsule including a capsule main body for forming a mixing compartment accommodating a powder component therein; a liquid cup for forming a liquid component-accommodating chamber accommodating a liquid component therein, which is engaged with the capsule main body; a plunger having, in the front end thereof, a rod-like protrusion for breaking through a second aperture in the front end of the liquid cup and then breaking through the first aperture in a front end of the capsule main body, which is engaged with the liquid cup; and a nozzle fixed or set in a front end portion of the capsule main body; provided is a mechanism in which the liquid cup engaged with the capsule main body is backed through rotation against the capsule main body to expand a volume of the mixing compartment, thereby rendering it in vacuo.

## Description

### BACKGROUND OF THE INVENTION

### 1. Field of the Invention:

The present invention relates to a vacuum type capsule for a dental restoration material, by which an admixture can be administered to a site of a patient to be restored in a good state without substantially containing air bubbles, immediately after admixing a dental restoration material comprising two components of definite amounts of previously weighed powder component and liquid component, in filling, cementing, lining and other applications for restoration of a tooth in the dental remedy field.

### 2. Description of the Conventional Art:

In general, a dental restoration material is used for restoration of a tooth, such as filling, cementing and lining. As the dental restoration material, a two-component system material comprising a powder component and a liquid component, which are reacted with each other upon admixing, is usually used. Hitherto, this two-component system dental restoration material was provided for use after appropriately weighing the powder component and the liquid component every time and admixing them with each other. However, in recent years, for the purposes of omitting a weighing operation of the powder component and the liquid component and an operation for accommodating the dental restoration material after admixing into a syringe for administering it to a site to be restored, there have been developed capsules for dental restoration material, in which definite amounts of the powder component and the liquid component are previously weighed and accommodated in an isolated state from each other, the isolated state is released at a desired time, the both components are admixed with each other by mechanical shaking in a mixer or the like, and the resulting admixture is extruded and administered directly to a site to be restored, such as a tooth cavity, through a nozzle.

For example, in a capsule as disclosed in Japanese Patent Publication No. 38853/1991, of the two components, the powder component is accommodated in a mixing compartment of a capsule main body, and the other liquid component is charged in a bag formed by a sheet film such as an aluminum foil, which is assembled in a side portion of the mixing compartment accommodating the powder component by means of a clip. The capsule main body has a discharge hole in a front end portion thereof. This discharge hole can be clogged by a spherical bearing portion in a rear end portion of a distribution nozzle. Further, the distribution nozzle is held from the out side by means of a separately formed cap, thereby preventing the powder component from leakage out of the mixing compartment. And, at the time of use, the clip is pushed toward a direction of the mixing compartment using an exclusive jig separately prepared, thereby smashing and breaking the bag accommodating the liquid component therein; the liquid component is made to flow into an interior of the mixing compartment through an aperture provided on a side wall of the mixing compartment, followed by shaking in a mixer or the like to admix the liquid component and the powder component with each other; the spherical bearing portion in the rear end portion of the distribution nozzle is then rotated to release a passage of the distribution nozzle; and the admixture is extruded from the distribution nozzle through a separately prepared jig by means of a pressing of a piston.

Further, a two-component system capsule for mixing and discharge as disclosed in Japanese Patent Laid-Open No. 268555/1987 takes a structure in which of two components, the powder component is accommodated in a mixing compartment within a capsule main body, and the other liquid component is accommodated in a bag formed by a sheet film comprising a resin, a metal foil, or a laminate comprising a resin and a metal foil. In this bag, the strength in the main body side is previously set to be low, and the bag is assembled by a cap to be screw engaged with the capsule main body in the front end side of the capsule main body. At the time of use, when the cap is firmly screw engaged with the capsule main body and moved, the sheet in the capsule main body side is broken, and the liquid component flows into the mixing compartment through an aperture provided on a center axis of the front end of the capsule main body. Thus, when shaking is performed in a mixer or the like, the liquid component is admixed with the powder component. After admixing, a through rod set within a nozzle provided on a center axis of the cap is pushed in and breaks through the sheet of the bag in the cap side, i.e., in the nozzle side, to form a discharge outlet for the admixture. Thereafter, the through rod is removed, a piston set within the rear end portion of the capsule main body is moved to the front end portion side of the capsule main body, and the admixture in the mixing compartment is discharged through the nozzle.

Further, like Japanese Patent Laid-Open No. 268555/1987 as cited above, Japanese Patent Publication No. 81384/1991 discloses a two-component system capsule for dental restoration material in which a bag having a liquid component accommodated therein, which is formed by a sheet film such as an aluminum foil, is aligned in an outside of a front end of a mixing compartment of a capsule main body; and the bag is ruptured by a screw-in pushing pressure of a cap, thereby making the liquid component flow into the mixing compartment through an aperture on a center axis of the capsule main body. Thus, when shaking is performed in a mixer or the like, the liquid component is admixed with the powder component. After admixing, a bag breakthrough body-equipped plunger provided in a rear end portion of the capsule main body is moved by means of a push rod of an applier, to break through the sheet of the bag in the nozzle side, thereby extruding the admixture within the mixing compartment from the nozzle.

Any of the above-described capsules uses a bag in which the liquid component is wrapped by a sheet film of a metal foil or the like. These capsules, however, involved such problems that when the bag is ruptured and broken, the aluminum foil on the fractured surface of the sheet constituting the bag is dissolved in the liquid component and that the fractured pieces of the bag are incorporated into the dental restoration material. Thus, as a capsule of a mode not using such a bag, Japanese Patent Laid-Open No. 131459/1996 proposes a capsule having a structure comprising a cylindrical capsule main body having a mixing compartment for accommodating a powder component therein, in which a thin film-like seal portion for clogging a circular hole for discharging an admixture, which is provided on a center axis of a front end portion, is formed, a male screw is provided on an outer periphery side surface from a front end portion to a middle portion, and an applier-engaging groove is engraved on an outer periphery side surface in the vicinity of a rear end portion; a cup-like liquid-accommodating tool for accommodating a liquid component therein, in which a thin film-like seal portion for clogging a circular flow-in hole for the liquid component is formed on a center axis of a front end portion thereof, an evagination portion that is engaged with a cylindrical portion for forming the mixing compartment of the capsule main body is provided on an outer periphery surface in the vicinity of the front end port ion, and a convex stopper having a size such that it does not easily slide into the capsule main body during breaking through the thin film-like seal portion to form the flow-in hole for the liquid component, but, when a large force is applied, it is not inhibited to slide into the capsule main body, is provided on an outer side surface in the vicinity of a rear end portion thereof; a plunger, in which a tip portion thereof for breaking through the thin film-like seal portion of the liquid-accommodating tool and the thin film-like seal portion of the capsule main body has a planar rod-like protrusion in its front end portion, and an evagination portion that is engaged with a cylindrical portion within the liquid-accommodating tool is provided on an outer periphery surface in the vicinity of the front end portion; a cap having a nozzle-engaging mouth on a center axis of a front end portion thereof and screw provided, on an inner periphery side surface thereof with a female screw to be engaged with the male screw that is provided on the capsule main body; and a nozzle having a shape such that a rear end portion thereof can be engaged with the outer surface of the front end portion of the capsule main body.

In the capsules having such various structures, when the dental restoration material comprising two components of definite amounts of the previously weighed powder component and liquid component is admixed by shaking in a mixer, air present in the mixing compartment mingles into the admixture, whereby it exists as air bubbles. For this reason, the dental restoration material administered in a dental restoration site such as a cavity of a patient contains the air bubbles. Accordingly, the capsules of the conventional art involved various problems including a reduction in the strength and a change in the color tone with respect to the dental restoration material.

### SUMMARY OF THE INVENTION

The present invention is aimed to overcome the above-described problems of the capsules for dental restoration material of the conventional art and provide a vacuum type capsule for dental restoration material, which is less in the occurrence of a phenomenon that, when a dental restoration material comprising two components of definite amounts of previously weighed powder component and liquid component accommodated in a conventional capsule for dental restoration material is admixed by shaking in a mixer or the like, air present in a mixing compartment mingles as air bubbles into the admixture.

In order to achieve the above-described aim, we, the present inventors made extensive and intensive investigations. As a result, it has been found that the aim can be achieved by the matter that after expanding a volume of a mixing compartment of a cylindrical capsule main body, in which a powder component is accommodated, thereby rendering it in vacuo, a liquid component is made to flow into the mixing compartment, thereby admixing the powder component and the liquid component each other, leading to accomplishment of the invention.

Specifically, the invention relates to a vacuum type capsule for dental restoration material comprising a cylindrical capsule main body for forming a mixing compartment accommodating a powder component therein; a cylindrical liquid cup for forming a liquid component-accommodating chamber accommodating a liquid component therein, which is engaged with a cylinder portion of the capsule main body; a plunger having, in the front end thereof, a rod-like protrusion for breaking through a second aperture in the front end of the liquid cup and then breaking through a first aperture in the front end of the capsule main body, which is engaged with a cylinder portion of the liquid cup; and a nozzle fixed or set in a front end portion of the capsule main body, wherein the vacuum type capsule for dental restoration material is provided with a mechanism in which the liquid cup engaged with the capsule main body is backed through rotation against the capsule main body to expand a volume of the mixing compartment, thereby rendering it in vacuo; and a mechanism in which the front end of the liquid cup can be advanced to the front end of the capsule main body, together with the plunger whose rod-like protrusion has broken through the second aperture in the front end of the liquid cup, in a state that the volume of the mixing compartment is expanded by the foregoing mechanism, thereby rendering it in vacuo, or a mechanism in which, after expanding the volume of the mixing compartment by the foregoing mechanism, thereby rendering it in vacuo and advancing the liquid cup engaged with the capsule main body through rotation in the reverse direction against the capsule main body, the front end of the liquid cup can be advanced to the front end of the capsule main body, together with the plunger whose rod-like protrusion has broken through the second aperture in the front end of the liquid cup.

As the mechanism in which the liquid cup engaged with the capsule main body is backed through rotation against the capsule main body to expand a volume of the mixing compartment, thereby rendering it in vacuo, employable are an embodiment constructed of a spiral cam groove engraved on an outer periphery of the liquid cup and a guide pin, the front end of which penetrates through the cylinder portion of the capsule main body and is positioned within the cam groove; and an embodiment in which the capsule main body is constructed of a front portion main body and a rear portion main body where the liquid cup separated from the front portion main body is engaged more firmly than the front portion main body, and a boundary portion with the front portion main body is constructed of a surface inclined from an axis direction of the cylinder. As the mechanism in which the front end of the liquid cup can be advanced to the front end of the capsule main body, together with the plunger whose rod-like protrusion has broken through the second aperture in the front end of the liquid cup, in a state that the volume of the mixing compartment is expanded by the foregoing mechanism, thereby rendering it in vacuo, employable are an embodiment in the case of the former embodiment, which is constructed of a linear groove for guiding a guide pin engraved extending from the front end of the cam groove backward in parallel with the axis direction of the liquid cup and a guide pin; and an embodiment in the case of the latter embodiment, which is constructed of the above-described front portion main body and rear portion main body and the liquid cup that can freely slide within the front portion and rear portion main bodies. As the mechanism in which after expanding the volume of the mixing compartment by the foregoing mechanism, thereby rendering it in vacuo, and advancing the liquid cup engaged with the capsule main body through rotation in the reverse direction against the capsule main body, the front end of the liquid cup can be advanced to the front end of the capsule main body, together with the plunger whose rod-like protrusion has broken through the second aperture in the front end of the liquid cup, employable are an embodiment in the case of the former embodiment, which is constructed of a linear groove for guiding a guide pin engraved extending from the rear end of the cam groove backward in parallel with the axis direction of the liquid cup and a guide pin; and an embodiment in the case of the latter embodiment, which is constructed of the front portion main body and rear portion main body each having the above-described construction and the liquid cup that can freely slide within the front portion and rear portion main bodies.

### BRIEF DESCRIPTION OF THE DRAWINGS

Fig. 1 is a side cross-section view of a structure of one embodiment of a vacuum type capsule for dental restoration material according to the present invention;
Fig. 2 is a side cross-sectional view showing the state where a liquid cup in the state of Fig. 1 is backed to expand a mixing compartment;
Fig. 3 is a side cross-sectional view showing the state where a plunger in the state of Fig. 2 is slid to make a liquid component flow into the mixing compartment;
Fig. 4 is a side cross-sectional view showing the state where after admixing the liquid component with a powder component, the liquid cup and the plunger in the state of Fig. 3 are advanced, thereby extruding the admixed dental restoration material from a nozzle;
Fig. 5 is a side cross-section view of a structure of another embodiment of a vacuum type capsule for dental restoration material according to the present invention;
Fig. 6 is a side cross-sectional view showing the state where a liquid cup in the state of Fig. 5 is backed to expand a mixing compartment;
Fig. 7 is a side cross-sectional view showing the state where a plunger in the state of Fig. 6 is slid to make a liquid component flow into the mixing compartment;
Fig. 8 is a side cross-sectional view showing the state where after admixing the liquid component with a powder component, the liquid cup in the state of Fig. 7 is advanced through rotation in the reverse direction against a capsule main body;
Fig. 9 is a side cross-sectional view showing the state where the liquid cup and the plunger in the state of Fig. 8 are further advanced, thereby extruding the admixed dental restoration material from a nozzle;
Fig. 10 is a side cross-section view of a structure of a still another embodiment of a vacuum type capsule for dental restoration material according to the present invention;
Fig. 11 is a side cross-sectional view showing the state where a liquid cup in the state of Fig. 10 is backed to expand a mixing compartment;
Fig. 12 is a side cross-sectional view showing the state where a plunger in the state of Fig. 11 is slid to make a liquid component flow into the mixing compartment;
Fig. 13 is a side cross-sectional view showing the state where the liquid cup and the plunger in the state of Fig. 12 are further advanced, thereby extruding the admixed dental restoration material from a nozzle;
Fig. 14 is a side cross-sectional view showing the state where after admixing the liquid component with a powder component, the liquid cup in the state of Fig. 12 is advanced through rotation in the reverse direction against a capsule main body; and
Fig. 15 is a side cross-sectional view showing the state where the liquid cup and the plunger in the state of Fig. 14 are further advanced, thereby extruding the admixed dental restoration material from the nozzle.

### DESCRIPTION OF THE PREFERRED EMBODIMENTS

Embodiments of the vacuum type capsule for dental restoration material according to the present invention will be described in detail with reference to the drawings.

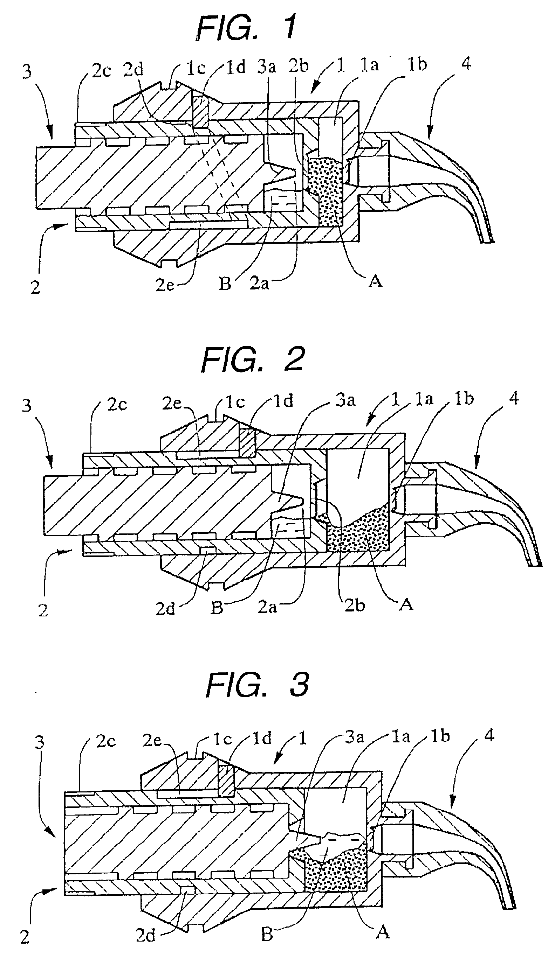

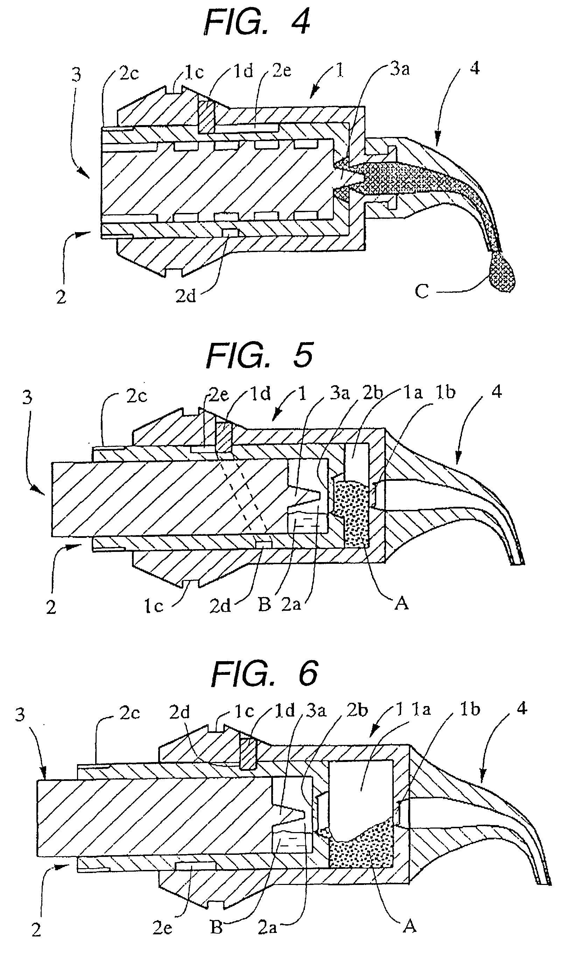

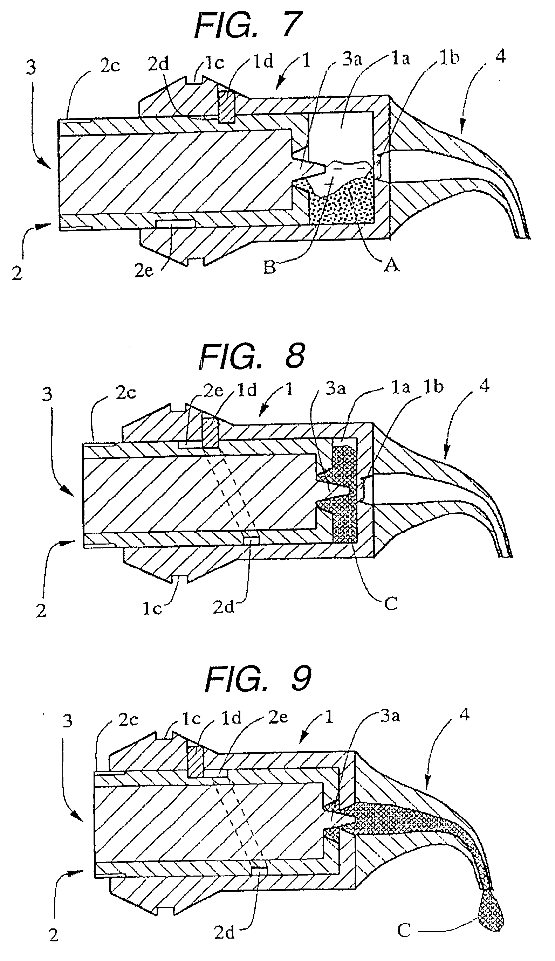

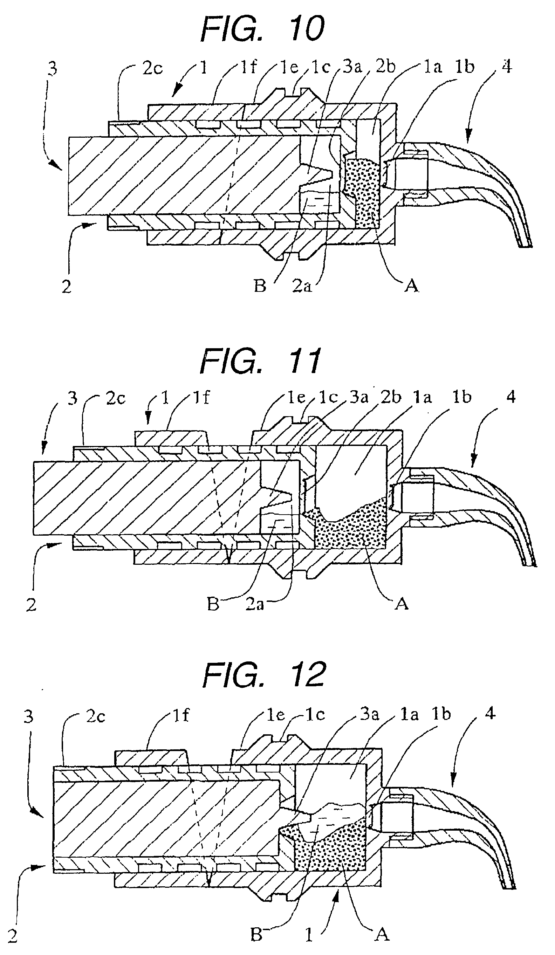

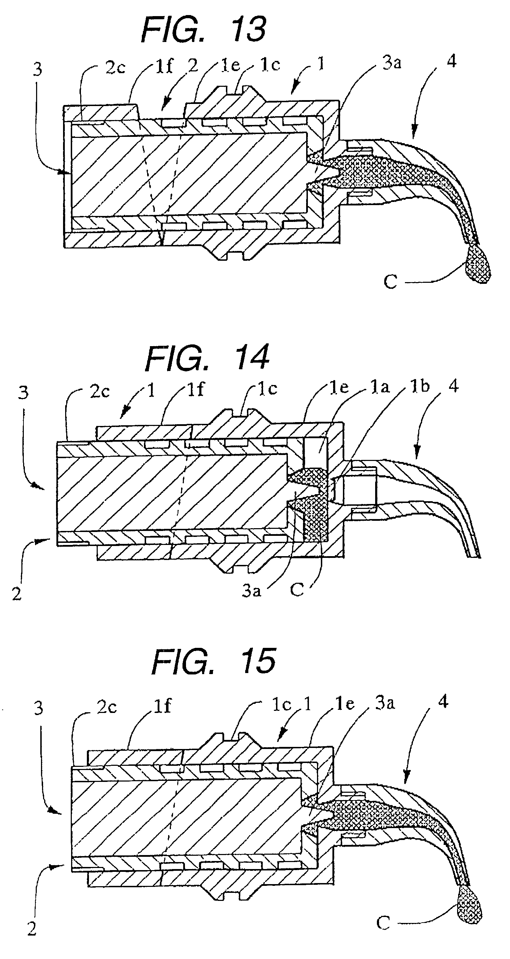

Fig. 1 is a side cross-section view of a structure of one embodiment of a vacuum type capsule for dental restoration material according to the present invention; Fig. 2 is a side cross-sectional view showing the state where a liquid cup in the state of Fig. 1 is backed to expand a mixing compartment; Fig. 3 is a side cross-sectional view showing the state where a plunger in the state of Fig. 2 is slid to make a liquid component flow into the mixing compartment; Fig. 4 is a side cross-sectional view showing the state where after admixing the liquid component with a powder component, the liquid cup and the plunger in the state of Fig. 3 are advanced, thereby extruding the admixed dental restoration material from a nozzle; Fig. 5 is a side cross-section view of a structure of another embodiment of a vacuum type capsule for dental restoration material according to the present invention; Fig. 6 is a side cross-sectional view showing the state where a liquid cup in the state of Fig. 5 is backed to expand a mixing compartment; Fig. 7 is a side cross-sectional view showing the state where a plunger in the state of Fig. 6 is slid to make a liquid component flow into the mixing compartment; Fig. 8 is a side cross-sectional view showing the state where after admixing the liquid component with a powder component, the liquid cup in the state of Fig. 7 is advanced through rotation in the reverse direction against a capsule main body; Fig. 9 is a side cross-sectional view showing the state where the liquid cup and the plunger in the state of Fig. 8 are further advanced, thereby extruding the admixed dental restoration material from a nozzle; Fig. 10 is a side cross-section view of a structure of a still another embodiment of a vacuum type capsule for dental restoration material according to the present invention; Fig. 11 is a side cross-sectional view showing the state where a liquid cup in the state of Fig. 10 is backed to expand a mixing compartment; Fig. 12 is a side cross-sectional view showing the state where a plunger in the state of Fig. 11 is slid to make a liquid component flow into the mixing compartment; Fig. 13 is a side cross-sectional view showing the state where the liquid cup and the plunger in the state of Fig. 12 are further advanced, thereby extruding the admixed dental restoration material from a nozzle; Fig. 14 is a side cross-sectional view showing the state where after admixing the liquid component with a powder component, the liquid cup in the state of Fig. 12 is advanced through rotation in the reverse direction against a capsule main body; and Fig. 15 is a side cross-sectional view showing the state where the liquid cup and the plunger in the state of Fig. 14 are further advanced, thereby extruding the admixed dental restoration material from the nozzle.

In the drawings, a numeral 1 is a synthetic resin-made cylindrical capsule main body, in which a definite amount of a previously weighed powder component A is accommodated in an interior in the front end thereof, and which is provided with a cylindrical mixing compartment 1a for admixing the powder component A with a liquid component B when the liquid component B flows thereinto. In a front end portion of the capsule main body 1, provided is a first aperture 1b that can be easily broken through to form a discharge hole of an admixture C. Further, on an outer periphery of the capsule main body 1, engraved is an applier-engaging groove 1c to be engaged with a claw portion of an exclusive applier (not shown) provided with an extrusion rod for extruding a liquid cup 2 as described later in the forward direction. Moreover, on an outer surface of the front end portion of the capsule main body 1, fixed or set is a nozzle 4 through which the restoration material is poured into a site of a tooth of a patient to be restored.

This cylindrical capsule main body 1 includes an embodiment as in the embodiments shown in Figs. 1 to 9, wherein the capsule main body 1 is formed monolithically; and an embodiment as in the embodiment shown in Figs. 10 to 15, wherein the capsule main body 1 is constructed of a front portion main body 1e and a rear portion main body 1f that is separated from the front portion main body 1e and has a boundary portion with the front portion main body 1e constructed of a surface inclined from the axis direction of the cylinder. In the case of the latter embodiment, the cylindrical mixing compartment 1a, the first aperture 1b and the applier-engaging groove 1c are provided in the front portion main body 1e.

A numeral 2 is a synthetic resin-made liquid cup monolithically formed in a cylindrical shape, forming a liquid component-accommodating chamber 2a in which a definite amount of the previously weighed liquid component B is accommodated. In order that not only the liquid cup 2 is backed through rotation against the capsule main body 1 to expand a volume of the mixing compartment 1a, thereby rendering it in vacuo, but also the admixture C prepared by admixing the powder component A and the liquid component B with each other within the cylindrical mixing compartment 1a of the capsule main body 1 is extruded into the nozzle 4, the liquid cup 2 is engaged within the capsule main body 1 such that it can be freely rotated and slid. In a front end portion of the liquid cup 2, provided is a second aperture 2b that can be easily broken through to form a discharge hole for making the liquid component B flow into the mixing compartment 1a; and on an outer periphery of a rear end portion of the liquid cup 2, preferably, formed is a knurling tool 2c for picking for the rotation. Further, in the case where the capsule main body 1 takes the latter embodiment as described above, the liquid cup 2 is engaged more firmly with the rear portion main body 1f than with the front portion main body 1e. Preferably, in order that the liquid cup 2 can render the inside of the mixing compartment 1a of the capsule main body 1 in a sealed state as far as possible, formed is a ring-like protrusion capable of constituting a labyrinth packing in a prescribed position on the outer periphery thereof.

A numeral 3 is a synthetic resin-made plunger formed monolithically in a shape such that it is engaged with the cylinder portion of the liquid cup 2 and can slide within the liquid cup 2 toward the second aperture 2b. On a front end portion of the plunger 3, provided is a rod-like protrusion 3a having a function such that it break through the second aperture 2b of the liquid cup 2, thereby making the liquid component B within the liquid component-accommodating chamber 2a of the liquid cup 2 flow into the mixing compartment 1a of the capsule main body 1, and a function such that it moves within the capsule main body 1 unitedly with the liquid cup 2 and breaks through the first aperture 1b of the capsule main body 1, thereby extruding the admixture C within the mixing compartment 1a into the nozzle 4. At the initial stage, the rod-like protrusion 3a is in a state that the rear end thereof is protruded from the rear end of the liquid cup 2. The plunger 3 must be engaged with the cylinder portion of the liquid cup 2 such that the liquid component B accommodated within the liquid component-accommodating chamber 2a of the liquid cup 2 does not leak out. Accordingly, it is preferred that a ring-like protrusion capable of constituting a labyrinth packing is formed in a prescribed position on the outer periphery of the plunger 3.

A numeral 4 is a synthetic resin-made nozzle, which is fixed to the outer surface of the front end portion of the capsule main body 1 with an adhesive or by means of welding, or set by means of screw engagement or force-fit engagement. It is preferred that the nozzle 4 is set in the front end portion of the capsule main body 1 such that it can be freely rotated, as in the embodiment shown in Figs. 1 to 4.

In the present invention, it is necessary to expand the volume of the mixing compartment 1a of the cylindrical capsule main body 1, in which the powder component A is accommodated, thereby rendering it in vacuo and then making the liquid component B flow into the mixing compartment 1a to admix it with the powder component A. The operation for expanding the volume of the mixing compartment 1a to render it in vacuo is carried out by backing it through rotation of the liquid cup 2 engaged with the capsule main body 1 against the capsule main body 1.

As this mechanism, employed are an embodiment as in the embodiments as shown in Figs. 1 to 9, which is constructed of a spiral cam groove 2d engraved on the outer periphery of the liquid cup 2 and a guide pin 1d penetrating through a peripheral wall of the capsule main body 1, a front end of which is positioned within the cam groove 2d; and an embodiment as in the embodiment as shown in Figs. 10 to 15, in which the capsule main body 1 is constructed of the front portion main body 1e and the rear portion main body 1f where the liquid cup 2 separated from the front portion main body 1e is engaged more firmly than the front portion main body 1e, and the boundary portion with the front portion main body 1e is constructed of the surface inclined from the axis direction of the cylinder. In the case of the former embodiment, when the knurling tool 2c is picked, and the liquid cup 2 is rotated against the capsule main body 1, since the front end of the guide pin 1d penetrating through the cylinder portion of the capsule main body 1 is positioned within the spiral cam groove 2d engraved on the outer periphery of the liquid cup 2, the liquid cup 2 is guided backward by the guide pin 1d (see Figs. 2 and 6). On the other hand, in the case of the latter embodiment, when the knurling tool 2c is picked, and the liquid cup 2 is rotated, since the rear portion main body 1f engaged firmly with the liquid cup 2 is rotated against the front portion main body 1e, the liquid cup 2 is guided backward together with the rear portion main body 1f along the surface as the boundary with the front portion main body 1e, which is inclined from the axis direction of the cylinder (see Fig. 11).

With this mechanism, the following operations are required. That is, the volume of the mixing compartment 1a of the cylindrical capsule main body 1, in which the powder component A is accommodated, is expanded, thereby rending it in vacuo. Inthis state, the plunger 3 engaged with the cylinder portion of the liquid cup 2 is advanced toward the second aperture 2b of the liquid cup 2, and the rod-like protrusion 3a in the front end portion of the plunger 3 breaks through the second aperture 2b of the liquid cup 2, thereby making the liquid component B within the liquid component-accommodating chamber 2a of the liquid cup 2 flow into the mixing compartment 1a of the capsule main body 1. Thus, the powder component A and the liquid component B are admixed with each other within the mixing compartment 1a to form the admixture C. Further, the front end of the liquid cup 2 is advanced to the front end of the capsule main body 1, together with the plunger 3, the rod-like protrusion 3a of which has broken through the second aperture 2b of the liquid cup 2, whereby the rod-like protrusion 3a of the plunger 3 breaks through the first aperture 1b of the capsule main body 1, to extrude the admixture C into the nozzle 4.

In this case, the operation in which the plunger 3 is advanced toward the second aperture 2b of the liquid cup 2, and the rod-like protrusion 3a in the front end portion of the plunger 3 breaks through the second apertures 2b of the liquid cup 2, thereby making the liquid component B within the liquid component-accommodating chamber 2a of the liquid cup 2 flow into the mixing compartment 1a of the capsule main body 1, may be carried out in the following manner. That is, in the case of the former embodiment as described above, the plunger 3 is advanced toward the second aperture 2b of the liquid cup 2 by pressing with fingers or the like, in the state that the guide pin 1d is engaged with the cam groove 2d without rotating the liquid cup 2 against the capsule main body 1 to the end (see Figs. 3 and 7). Further, in the case of the latter embodiment as described above, since the liquid cup 2 is engaged more firmly with the rear portion main body 1f than with the front portion main body 1e, the plunger 3 is advanced toward the second aperture 2b of the liquid cup 2 by pressing with fingers or the like (see Fig. 12).

Then, the operation in which, in the state that the volume of the mixing compartment 1a is expanded, thereby rending it in vacuo, the front end of the liquid cup 2 is advanced to the front end of the capsule main body 1, together with the plunger 3, the rod-like protrusion 3a of which has broken through the second aperture 2b of the liquid cup 2, whereby the rod-like protrusion 3a of the plunger 3 breaks through the first aperture 1b of the capsule main body 1, to extrude the admixture C into the nozzle 4, may be carried out in the following manner. That is, in the state that the claw of the applier is engaged with the applier-engaging groove 1c of the capsule main body 1 (the front portion main body 1e in the case of the embodiment as shown in Figs. 10 to 13), in the case of the above-described former embodiment in the embodiment as shown in Figs. 1 to 4, when the liquid cup 2 and the plunger 3 are advanced together to the front end side of the capsule main body 1 by rotating the liquid cup 2 against the capsule main body 1 to the end, the front end of the guide pin 1d, which has penetrated into the cylinder portion of the capsule main body 1 and is positioned within the cam groove 2d, moves along a linear groove 2e for guiding a guide pin 1d engraved extending from the front end of the cam groove 2d backward in parallel with the axis direction of the liquid cup 2 (see Fig. 4); and in the case of the above-described latter embodiment in the embodiment as shown in Figs. 10 to 13, when the liquid cup 2 and the plunger 3 are advanced together to the front end side of the front portion main body 1e, the liquid cup 2 slides and moves within the front portion main body 1e and the rear portion main body 1f (see Fig. 13).

On the other hand, the operation in which after expanding the volume of the mixing compartment 1a to render it in vacuo by the mechanism that the liquid cup 2 engaged with the capsule main body 1 is backed through rotation against the capsule main body 1 to expand the volume of the mixing compartment 1a, thereby rending it in vacuo, the liquid cup 2 engaged with the capsule main body 1 is advanced through rotation in the reverse direction against the capsule main body 1, and then, the front end of the liquid cup 2 is advanced to the front end of the capsule main body 1, together with the plunger 3, the rod-like protrusion 3a of which has broken through the second aperture 2b in the front end of the liquid cup 2, whereby the rod-like protrusion 3a of the plunger 3 breaks through the first aperture 1b of the capsule main body 1 to extrude the admixture C into the nozzle 4, may be carried out in the following manner. That is, in the case of the above-described former embodiment of the embodiment as shown in Figs. 5 to 9, in the direction reverse to the direction of the rotation where the liquid cup 2 engaged with the capsule main body 1 is backed through rotation against the capsule main body 1 to expand the volume of the mixing compartment 1a, thereby rending it in vacuo, the liquid cup 2 is rotated against the capsule main body 1, while picking the knurling tool 2c, until it has returned to the state before the vacuum state, whereby the liquid cup 2 and the plunger 3 are advanced together to the front end side of the capsule main body 1 (see Fig. 8); and in the state that the claw portion of the applier is engaged with the applier-engaging groove 1c of the capsule main body 1, the liquid cup 2 and the plunger 3 are advanced together to the front end side of the capsule main body 1, whereby the front end of the guide pin 1d, which has penetrated into the cylinder portion of the capsule main body 1 and is positioned within the cam groove 2d, moves along the linear groove 2e for guiding a guide pin engraved extending from the rear end of the cam groove 2d backward in parallel with the axis direction of the liquid cup 2 (see Fig. 9). Further, in the case of the above-described latter embodiment of the embodiment as shown in Figs. 10 to 12 and Figs . 14 and 15, in the direction reverse to the direction of the rotation where the liquid cup 2 engaged with the front portion main body 1e is backed through rotation against the front portion main body 1e together with the rear portion main body 1f to expand the volume of the mixing compartment 1a, thereby rending it in vacuo, the liquid cup 2 is rotated against the front portion main body 1e, while picking the knurling tool 2c, until it has returned to the state before the vacuum state, and then the liquid cup 2 and the rear portion main body 1f are pressed and moved together toward the front portion main body 1e (see Fig. 14); and in the state that the claw portion of the applier is engaged with the applier-engaging groove 1c of the front portion main body 1e, the liquid cup 2 and the plunger 3 are advanced together to the front end side of the front portion main body 1e, whereby the liquid cup 2 slides and moves within the front portion main body 1e and the rear portion main body 1f (see Fig. 15).

As described above in detail, the vacuum type capsule for dental restoration material according to the present invention comprises a cylindrical capsule main body for forming a mixing compartment accommodating a powder component therein; a cylindrical liquid cup for forming a liquid component-accommodating chamber accommodating a liquid component therein, which is engaged with a cylinder portion of the capsule main body; a plunger having, in the front end thereof, a rod-like protrusion for breaking through a second aperture in the front end of the liquid cup and then breaking through a first aperture in the front end of the capsule main body, which is engaged with a cylinder portion of the liquid cup; and a nozzle fixed or set in a front end portion of the capsule main body, wherein the vacuum type capsule for dental restoration material is provided with a mechanism in which the liquid cup engaged with the capsule main body is backed through rotation against the capsule main body to expand a volume of the mixing compartment, thereby rendering it in vacuo. Accordingly, when the liquid component accommodated within the liquid cup is made to flow into the powder component accommodated within the mixing compartment, and the both components are admixed with each other, it is possible to render the mixing compartment in vacuo. Thus, the admixture of the powder component and the liquid component can be processed into a dental restoration material in a good state containing less air bubbles. Consequently, the present invention can overcome various problems such as a reduction in the strength or a change in the color tone of a dental restoration material to be administered in a dental restoration site such as a cavity of a patient.

Further, the vacuum type capsule for dental restoration material according to the present invention is also provided with a mechanism in which the front end of the liquid cup can be advanced to the front end of the capsule main body, together with the plunger whose rod-like protrusion has broken through the second aperture in the front end of the liquid cup, in a state that the volume of the mixing compartment is expanded, by the mechanism in which the liquid cup engaged with the capsule main body is backed through rotation against the capsule main body to expand a volume of the mixing compartment, thereby rendering it in vacuo; or a mechanism in which after expanding the volume of the mixing compartment by the mechanism in which the liquid cup engaged with the capsule main body is backed through rotation against the capsule main body to expand a volume of the mixing compartment, thereby rendering it in vacuo and advancing the liquid cup engaged with the capsule main body through rotation in the reverse direction against the capsule main body, the front end of the liquid cup can be advanced to the front end of the capsule main body, together with the plunger whose rod-like protrusion has broken through the second aperture in the front end of the liquid cup. Accordingly, it is possible to administer a dental restoration material comprising the admixture of the powder component and the liquid component, which is in a good state containing less air bubbles, directly in a dental restoration site such as a cavity of a patient, through a simple operation of setting the dental restoration material in an applier and extruding it.

In the light of the above, the vacuum type capsule for dental restoration material according to the present invention is greatly valuable in contribution to the dental remedy.

While the present invention has been described in detail and with reference to specific embodiments thereof, it will be apparent to one skilled in the art that various changes and modifications can be made therein without departing from the spirit and scope thereof.

## Claims

1. A vacuum type capsule for dental restoration material comprising a cylindrical capsule main body (1) for forming a mixing compartment (1a) accommodating a powder component (A) therein; a cylindrical liquid cup (2) for forming a liquid component-accommodating chamber (2a) accommodating a liquid component (B) therein, which is engaged with a cylinder portion of the capsule main body (1); a plunger (3) having, in the front end thereof, a rod-like protrusion (3a) for breaking through a second aperture (2b) in the front end of the liquid cup (2) and then breaking through a first aperture (1b) in the front end of the capsule main body (1), which is engaged with a cylinder portion of the liquid cup (2); and a nozzle (4) fixed or set in a front end portion of the capsule main body (1), wherein the vacuum type capsule for dental restoration material is provided with:
a mechanism in which the liquid cup (2) engaged with the capsule main body (1) is backed through rotation against the capsule main body (1) to expand a volume of the mixing compartment (1a), thereby rendering it in vacuo; and
a mechanism in which the front end of the liquid cup (2) can be advanced to the front end of the capsule main body (1), together with the plunger (3) whose rod-like protrusion (3a) has broken through the second aperture (2b) in the front end of the liquid cup (2), in a state that the volume of the mixing compartment (1a) is expanded by the foregoing mechanism, thereby rendering it in vacuo.

2. The vacuum type capsule for dental restoration material as claimed in claim 1, wherein:
the mechanism for expanding the volume of the mixing compartment (1a), thereby rendering it in vacuo, is constructed of a spiral cam groove (2d) engraved on an outer periphery of the liquid cup (2) and a guide pin (1d), the front end of which penetrates through the cylinder portion of the capsule main body (1) and is positioned within the cam groove (2d); and
the mechanism in which the front end of the liquid cup (2) can be advanced to the front end of the capsule main body (1), together with the plunger (3) whose rod-like protrusion (3a) has broken through the second aperture (2b) in the front end of the liquid cup (2), in a state that the volume of the mixing compartment (1a) is expanded by the foregoing mechanism, thereby rendering it in vacuo, is constructed of a linear groove (2e) for guiding the guide pin (1d) engraved extending from the front end of the cam groove (2d) backward in parallel with the axis direction of the liquid cup (2) and the guide pin (1d).

3. The vacuum type capsule for dental restoration material as claimed in claim 1, wherein:
the mechanism for expanding the volume of the mixing compartment (1a), thereby rendering it in vacuo, is constructed of a front portion main body (1e) and a rear portion main body (1f) where the liquid cup (2) separated from the front portion main body (1e) is engaged more firmly than the front portion main body (1e), and a boundary portion with the front portion main body (1e) is constructed of a surface inclined from an axis direction of the cylinder; and
the mechanism in which the front end of the liquid cup (2) can be advanced to the front end of the capsule main body (1), together with the plunger (3) whose rod-like protrusion (3a) has broken through the second aperture (2b) in the front end of the liquid cup (2), in a state that the volume of the mixing compartment (1a) is expanded by the foregoing mechanism, thereby rendering it in vacuo, is constructed of the front portion main body (1e) and rear portion main body (1f) and the liquid cup (2) that can freely slide within the front portion and rear portion main bodies (1e, 1f).

4. A vacuum type capsule for dental restoration material comprising a cylindrical capsule main body (1) for forming a mixing compartment (1a) accommodating a powder component (A) therein; a cylindrical liquid cup (2) for forming a liquid component-accommodating chamber (2a) accommodating a liquid component (B) therein, which is engaged with a cylinder portion of the capsule main body (1); a plunger (3) having, in the front end thereof, a rod-like protrusion (3a) for breaking through a second aperture (2b) in the front end of the liquid cup (2) and then breaking through a first aperture (1b) in the front end of the capsule main body (1), which is engaged with a cylinder portion of the liquid cup (2); and a nozzle (4) fixed or set in a front end portion of the capsule main body (1), wherein the vacuum type capsule for dental restoration material is provided with:
a mechanism in which the liquid cup (2) engaged with the capsule main body (1) is backed through rotation against the capsule main body (1) to expand a volume of the mixing compartment (1a), thereby rendering it in vacuo; and
a mechanism in which, after expanding the volume of the mixing compartment (1a) by the foregoing mechanism, thereby rendering it in vacuo, and advancing the liquid cup (2) engaged with the capsule main body (1) through rotation in the reverse direction against the capsule main body (1), the front end of the liquid cup (2) can be advanced to the front end of the capsule main body (1), together with the plunger (3) whose rod-like protrusion (3a) has broken through the second aperture (2b) in the front end of the liquid cup (2).

5. The vacuum type capsule for dental restoration material as claimed in claim 4, wherein:
the mechanism for expanding the volume of the mixing compartment (1a), thereby rendering it in vacuo, is constructed of a spiral cam groove (2d) engraved on an outer periphery of the liquid cup (2) and a guide pin (1d), the front end of which penetrates through the cylinder portion of the capsule main body (1) and is positioned within the cam groove (2d); and
the mechanism in which after expanding the volume of the mixing compartment (1a) by the foregoing mechanism, thereby rendering it in vacuo, and advancing the liquid cup (2) engaged with the capsule main body (1) through rotation in the reverse direction against the capsule main body (1), the front end of the liquid cup (2) can be advanced to the front end of the capsule main body (1), together with the plunger (3) whose rod-like protrusion (3a) has broken through the second aperture (2b) in the front end of the liquid cup (2), is constructed of a linear groove (2e) for guiding the guide pin (1d) engraved extending from the rear end of the cam groove (2d) backward in parallel with the axis direction of the liquid cup (2) and the guide pin (1d).

6. The vacuum type capsule for dental restoration material as claimed in claim 4, wherein:
the mechanism for expanding the volume of the mixing compartment (1a), thereby rendering it in vacuo, is constructed of a front portion main body (1e) and a rear portion main body (1f) where the liquid cup (2) separated from the front portion main body (1e) is engaged more firmly than the front portion main body (1e), and a boundary portion with the front portion main body (1e) is constructed of a surface inclined from an axis direction of the cylinder; and
the mechanism in which after expanding the volume of the mixing compartment (1a) by the foregoing mechanism, thereby rendering it in vacuo and advancing the liquid cup (2) engaged with the capsule main body (1) through rotation in a reverse direction against the capsule main body (1), the front end of the liquid cup (2) can be advanced to the front end of the capsule main body (1), together with the plunger (3) whose rod-like protrusion (3a) has broken through the second aperture (2b) in the front end of the liquid cup (2), is constructed of the front portion main body (1e) and rear portion main body (1f) and the liquid cup (2) that can freely slide within the front portion and rear portion main bodies (1e, 1f).
